# EUROPÄISCHE PATENTSCHRIFT

(11) **EP 1 187 262 B1**
(45) Veröffentlichungstag und Bekanntmachung des Hinweises auf die Patenterteilung: **16.02.2005**
(21) Anmeldenummer: 01121616.5
(22) Anmeldetag: 11.09.2001
(51) Int. Cl.: H01R 13/506, G02B 6/38, G02B 6/42

(54) **Isolierkörper für einen Steckverbinder zur Übertragung optischer und elektrischer Signale**
Insulating body for a plug connector for optical and electrical signal transmission
Corps isolant pour connecteur de transmission de signaux optiques et électriques

(30) Priorität: 11.09.2000 DE 10044790
(43) Veröffentlichungstag der Anmeldung: 13.03.2002
(73) Patentinhaber: Contact GmbH, 70565 Stuttgart (DE)
(72) Erfinder: Zink, Markus, 70372 Stuttgart (DE); Andrä, Frank, 73669 Lichtenwald (DE)
(74) Vertreter: Schmidt, Steffen J., Dipl.-Ing.

(56) Entgegenhaltungen:
- WO-A-97/31407
- FR-A- 2 707 765
- US-A- 4 993 803
- US-A- 4 998 896
- US-A- 5 901 263

## Beschreibung

### Gebiet der Erfindung

Die vorliegende Erfindung betrifft einen Isolierkörper zur Verwendung mit einem Steckverbinder, der es ermöglicht, elektrische Signale unter Verwendung herkömmlicher elektrischer Leiter und optische Signale unter Verwendung optischer Leiter sowie elektrische Signale sogenannter "Twisted Pair"-Leiter zu übertragen.

### Hintergrund der Erfindung

Zur Übertragung von Signalen zwischen Leitern werden Steckverbinder verwendet, die in ihren Gehäusebauteilen angeordnete Isolierkörper aufweisen. Die Leiter werden in den Isolierkörpern mit Kontakten verbunden, die zur Signalübertragung zu anderen Leitern mit entsprechenden Kontakten eines zugeordneten Isolierkörpers verbunden werden, an die die anderen Leiter elektrisch angeschlossen sind.

Üblicherweise werden zur Übertragung elektrischer Signale herkömmlicher elektrischer Leiter (z.B. Kupferleiter), zur Übertragung elektrischer Signale spezieller elektrischer Leiter (z.B. sogenannter "Twisted Pair"-Leiter) und zur Übertragung optischer Signale von optischen Leitern (z.B. Faserleitern) unterschiedliche auf die jeweilige Anwendung zugeschnittene Steckverbinder verwendet. Diese Vorgehensweise führt dazu, daß zum Verbinden von Leitungen, die unterschiedliche Leitertypen umfassen und/oder unterschiedliche Signale übertragen, unterschiedliche Steckverbindertypen erforderlich sind. Um derartige Leitungen unter Verwendung eines Steckverbindertyps zu verbinden, ist es erforderlich, daß die Steckverbinder und insbesondere deren Isolierkörper den Charakteristika unterschiedlicher Leiter und/oder unterschiedlicher Signale Rechnung tragen.

Im Gegensatz zu herkömmlichen Kupferleitungen, die unter Verwendung von in Isolierkörpern angeordneten Steckkontakten und Buchsenkontakten verbunden werden können, sind bei der Verwendung optischer Leiter zur Übertragung optischer Signale spezielle Anforderungen zu berücksichtigen. So ist es dort nicht möglich, mit elektrischen Stift- und Buchsenkontakten vergleichbare Verbindungen zu verwenden. Zur elektrischen Übertragung von Signalen reicht es im wesentlichen aus, wenn die Stift- und Buchsenkontakte an einer Stelle miteinander elektrisch leitend verbunden sind. Demgegenüber kommt einer Kontaktstelle zwischen optischen Leitern bei einer Übertragung optischer Signale eine besondere Bedeutung zu, da dort unerwünschte Signalverschlechterungen, insbesondere Dämpfungen optischer Signale auftreten können.

Um gewöhnliche elektrische (Kupfer-)Leiter und "Twisted Pair"-Leiter umfassende Leiter mit einem Steckverbindertyp verbinden zu können, sind daher Isolierkörper erforderlich, die neben den herkömmlichen Stift- und Buchsenkontakten für elektrische Leiter auch elektrisch leitende Verbindungen für "Twisted Pair"-Leiter bereitstellen, die mit "Crimp"-Verbindungen vergleichbare Verbindungen sind.

### Stand der Technik

Aus WO97/31407 ist ein elektrischer Stecker bekannt, der ein erstes Teil mit ersten und zweiten Rastelementen und einer ersten Anschlagsfläche und ein zweites Teil mit einer Einrichtung zum Einrasten der Rastelemente und eine zweite Anschlagsfläche aufweist. Zum Anordnen von elektrischen Leitern in dem Stecker werden die ersten Rastelemente mit dem zweiten Teil verrastet, elektrische Leiter in Durchführungen der ersten und zweiten Teile angeordnet und die zweiten Rastelemente mit dem zweiten Teil verrastet, um die elektrischen Leiter in dem Stecker zu sichern. Sind die zweiten Rastelemente mit dem zweiten Teil verrastet, kontaktieren sich die ersten und zweiten Anschlagsflächen. Die Durchführungen in dem Stecker weisen Federelemente auf, die bezüglich der Durchführungen radial nach innen wirkende Kräfte auf die elektrischen Leiter ausüben.

Der aus der Druckschrift US 4,993,803 bekannte elektro-optische Steckverbinder umfasst einen Stecker am Ende von optischen Faserkabeln und eine passende Buchse, die elektro/optische Vorrichtungen beherbergt und auf einer Schaltkreisplatine befestigt ist. Der Stecker umfasst einen zweiteiligen Steckerkörper aus einem Gehäuseteil und einem Abdeckteil. Das Abdeckteil wird aufgesteckt, indem das Gehäuseteil in das Abdeckteil geschoben wird, bis es von Verriegelungsstiften des Gehäuseteils zurückgehalten wird, die in seitliche Schlitze des Abdeckteils einrasten.

DE 199 45 173 A1 offenbart einen Steckverbinder für Lichtwellenleiterkabel mit Bohrungen zur Aufnahme von Enden von Lichtwellenleiterkabeln. Der Steckverbinder weist in den Bohrungen jeweils einen Crimp zur Festlegung von Enden der Lichtwellenleiterkabeln auf.

### Aufgabe der Erfindung

Aufgabe der Erfindung ist es, einen Isolierkörper bereitzustellen, der es erlaubt, elektrische und optische Signale und/oder elektrische Signale von Leitern unterschiedlichen Typs zu übertragen. Insbesondere soll es die Erfindung ermöglichen, in einem Isolierkörper neben herkömmlichen Stift- und Buchsenkontakten für elektrische Signale Kontakte zur Übertragung optischer Signale und/oder Kontakte zur Übertragung elektrischer Signale von "Twisted Pair"-Leitern zu verwenden.

### Kurzbeschreibung der Erfindung

Wie oben erwähnt, ist es zur Übertragung optischer Signale zwischen optischen Leitern erforderlich, daß zur Übertragung verwendete Komponenten (i.e. optische Kontaktelemente) im Verhältnis zueinander so positioniert werden, daß an den Kontaktstellen keine optischen Signalverschlechterungen (z.B. Dämpfung) auftreten. Hierfür ist es erforderlich, daß Isolierkörper von zur Verbindung verwendeten Steckverbindern eine möglichst exakte Positionierung der optischen Kontakte gewährleisten.

Demgegenüber sind die Anforderungen an die Positionierung herkömmlicher elektrischer Stift- und Buchsenkontakte in einem Isolierkörper deutlich geringer, da dort eine elektrische Übertragung gewährleistet ist, solange die elektrischen Kontakte leitend miteinander verbunden sind.

Um diese sich entgegenstehenden Anforderungen durch einen Isolierkörper für einen Steckverbinder zu erfüllen, wurde bei der vorliegenden Erfindung der Ansatz gewählt, einen Isolierkörper konstruktiv so zu gestalten, daß zum Ausgleich von Toleranzen des Isolierkörpers und von in Verbindung mit diesem zu verwendenden Komponenten in dem Isolierkörper anzuordnende Signalübertragungskomponenten (z.B. Kontakte) exakt und reproduzierbar positioniert werden können.

Ausgehend von dieser Lösung wurde erkannt, daß ein Isolierkörper auch in Verbindung mit "Twisted Pair"-Leitern verwendet werden kann, wenn für diese Leiter Signalübertragungskomponenten (z.B. Kontakte) verwendet werden, die vergleichbar zu Kontakten für optische Verbindungen gestaltet sind. Auch hier ist es erforderlich, die Kontakte für "Twisted Pair"-Leiter in einem Isolierkörper exakt und reproduzierbar positionieren zu können.

Dies wird durch einen Isolierkörper gemäß Anspruch 1 gelöst, der zur Übertragung elektrischer und optischer Signale in einem Steckverbinder ausgelegt ist. Der Isolierkörper umfaßt ein Unterteil mit einem ersten Rastelement, einem zweiten Rastelement und einem Anschlag sowie ein Oberteil mit einem Distanzkragen und einer an dem Distanzkragen angeordneten Rasteinrichtung. Das erste Rastelement dient zur Verrastung der Unter- und Oberteile in einer ersten Raststellung, wobei das erste Rastelement in die Rasteinrichtung verrastet ist. In einer zweiten Raststellung verrastet das zweite Rastelement des Unterteils mit der Rasteinrichtung des Oberteils, wobei der Anschlag in mechanischer Wirkverbindung mit dem Distanzkragen steht.

Die Verwendung des zweiten Rastelements und des Anschlags an dem Unterteil in Verbindung mit der Rasteinrichtung und dem Distanzkragen gewährleistet, daß die Unter- und Oberteile einerseits aufgrund der Wirkverbindung des zweiten Rastelements und der Rasteinrichtung sicher miteinander verrasten und andererseits aufgrund der Wirkverbindung des Anschlags und des Distanzkragens jederzeit eine vorgegebene Position relativ zueinander einnehmen.

In der zweiten Raststellung befindet sich der erfindungsgemäße Isolierkörper in seiner Arbeitsstellung, in der er in einen entsprechenden Steckverbinder eingesetzt werden kann. Die erste Raststellung entspricht einem Zustand des Isolierkörpers, in dem elektrische und/oder optische Kontakte in diesem exakt positioniert werden können.

Erfindungsgemäß weist das Unterteil Durchführungen zur Aufnahme optischer Leiter und/oder spezieller elektrischer Leiter (z.B. "Twisted Pair"-Leiter) und in wenigstens einer Durchführung ein Federelement auf. In der zweiten Raststellung erzeugen die Federelemente auf in diesen Durchführungen angeordnete optische und/oder elektrische Leiter wirkende Federkräfte. Diese Federkräfte drücken die entsprechenden optischen und/oder elektrischen Leiter in gewünschte Positionen relativ zu dem Isolierkörper, wodurch Toleranzen der in dem Isolierkörper angeordneten optischen und/oder elektrischen Leiter selbst ausgeglichen werden.

Vorzugsweise erzeugen die Federelemente auch in der ersten Raststellung auf diese optischen und/oder elektrischen Leiter wirkende Federkräfte, um diese vorzupositionieren. Um die Konfektionierung des Isolierkörpers zu vereinfachen, sind die in der ersten Raststellung erzeugten Federkräfte kleiner als die in der zweiten Raststellung erzeugten Federkräfte.

Ferner kann das Unterteil des erfindungsgemäßen Isolierkörpers eine Einrichtung zur baueinheitlichen Integration einer Leiterplatte in den Isolierkörper und somit in einen damit zu verwendenden Steckverbinder aufweisen. Die Verwendung geeigneter Leiterplatten, genauer die Verwendung von auf Leiterplatten angeordneten geeigneten Schaltkreisen erlaubt es, optische und/oder elektrische Signale der zuvor genannten optischen Leiter und/oder speziellen elektrischen Leiter zu verarbeiten, um deren Übertragung zu optimieren.

Um die Konfektionierung des Isolierkörpers mit Kontakten für herkömmliche elektrische Leiter (z.B. Kupferleiter) zu vereinfachen, weisen die Durchführungen des Unterteils für derartige Leiter jeweils eine Spannzange auf. Die Spannzangen nehmen in der zweiten Raststellung eine Sicherungsstellung ein, um einen entsprechenden elektrischen Leiter in dem Isolierkörper zu sichern. Insbesondere sind die Spannzangen an dem Unterteil ausgeformte elastische Bauteile, die in der zweiten Raststellung elastisch verformt sind und aufgrund der dadurch entstehenden mechanischen Wirkverbindung mit durch die Spannzangen geführten elektrischen Leitern diese in dem Isolierkörper sichern.

Außerdem ist es vorgesehen, daß die Spannzangen in der ersten Raststellung eine Freigabestellung einnehmen, die es ermöglicht, elektrische Leiter auf einfache Weise zu montieren und/oder zu demontieren, genauer in die entsprechenden Durchführungen in dem Unterteil einzuführen und/oder daraus zu entfernen.

Damit die Spannzangen in der zweiten Raststellung ihre Sicherungsstellung einnehmen, weisen den die Spannzangen aufweisenden Durchführungen des Unterteils zugehörigen Durchführungen des Oberteils jeweils einen Bereich auf, der in der zweiten Raststellung auf die entsprechende Spannzange so einwirkt, daß diese in die Sicherungsstellung bewegt wird.

Vorzugsweise weisen diese Durchführungen des Oberteils jeweils auch einen Aufnahmebereich auf, in dem die entsprechende Spannzange in der ersten Raststellung wenigstens teilweise angeordnet ist und ihre Freigabestellung aufweist.

Die ersten und/oder zweiten Rastelemente des Unterteils können jeweils eine Raste oder mehrere Rasten umfassen. Um auch eine optische Kontrolle der beiden Raststellungen zu ermöglichen, umfaßt die Rasteinrichtung des Oberteils wenigstens ein in dem Distanzkragen ausgebildetes Rastfenster. Alternativ oder ergänzend ist es möglich, daß die Rasteinrichtung des Oberteils wenigstens eine in dem Distanzkragen gebildete Ausnehmung aufweist. Dies kann bei kleinen Isolierkörpern von Vorteil sein, da dadurch die mechanische Stabilität des Distanzkragens erhöht wird.

Im einfachsten Fall sind die in den Durchführungen des Unterteils angeordneten Federelemente sich quer zur Längsrichtung einer entsprechenden Durchführung erstreckende blattfederartige Federn, die vorzugsweise baueinheitlich an dem Unterteil ausgebildet sind.

Ferner ist es vorgesehen, Federelemente zu verwenden, die sich im wesentlichen quer zur Längsrichtung entsprechender Durchführungen erstrecken und eine wenigstens teilweise spiralartige Form aufweisen. Die spiralartige Form erlaubt es, optische und/oder elektrische Leiter, auf die eine Federkraft ausgeübt werden soll, durch die spiralartigen Federelemente zu führen. Um die gewünschte Federkraft zu übertragen, sind die spiralartigen Federelemente und insbesondere deren Durchmesser in Abhängigkeit zu verwendender Leiter zu dimensionieren.

Vorzugsweise umfaßt die Einrichtung zur baueinheitlichen Integration einer Leiterplatte zwei Leiterplattenfixierelemente, die sich von dem Unterteil erstrecken und zur Aufnahme und Sicherung von Leiterplatten dienen. Außerdem kann diese Einrichtung auch eine Leiterplattenaufnahme aufweisen, die in dem Unterteil ausgebildet ist und wenigstens teilweise in Verbindung mit den die Federelemente aufweisenden Durchführungen steht. Diese Verbindung der Durchführungen und der Leiterplattenaufnahme erlaubt es, entsprechende Leiter auf einfache Weise von einer Leiterplatte in und durch die Durchführungen zu führen.

### Kurzbeschreibung der Figuren

Bei der folgenden Beschreibung bevorzugter Ausführungsformen wird auf die beigefügten Figuren Bezug genommen, von denen zeigen:
- Fig. 1: eine schematische Darstellung einer Ausführungsform des Unterteils eines erfindungsgemäßen Isolierkörpers,
- Fig. 2: eine schematische Darstellung einer Ausführungsform des Oberteils eines erfindungsgemäßen Isolierkörpers,
- Fig. 3: eine schematische Querschnittsansicht des Unterteils von Fig. 1 und des Oberteils von Fig. 2 im verrasteten Zustand, und
- Fig. 4: eine schematische Querschnittsansicht des Isolierkörpers von Fig. 3 in einem Steckverbinder.

### Bevorzugte Ausführungsformen

Bevorzugte Ausführungsformen der Erfindung werden am Beispiel eines Isolierkörpers mit im wesentlichen rundem Querschnitt zur Verwendung in Rundsteckverbindern und zur Übertragung elektrischer Signale sowie optischer Signale erläutert. Bei optischen Leitern werden zum Teil Steckverbinder rechteckigen Querschnitts zur besseren Unterscheidbarkeit von Steckverbindern für elektrische Signale verwendet. Daher sieht die Erfindung auch Isolierkörper mit im wesentlichen rechteckigem Querschnitt zur Verwendung in entsprechenden Steckverbindern vor.

Ferner wurde für die Beschreibung bevorzugter Ausführungsformen ein Isolierkörper gewählt, der als Buchseneinsatz in einem Steckverbinder verwendet werden kann. Um den Isolierkörper als Steckereinsatz verwenden zu können, sind keine wesentlichen Änderungen des Aufbaus desselben erforderlich. Es sind lediglich Steckkontakte in Verbindung mit dem Isolierkörper zu verwenden, deren Form die im folgenden beschriebenen Wirkverbindungen mit dem Isolierkörper gewährleistet, um dessen Funktion bereitzustellen.

Der im folgenden beschriebene Isolierkörper erlaubt Übertragungen optischer Signale von bis zu zwei optischen Leitern und elektrischer Signale von bis zu vier elektrischen Leitern (z.B. Kupferleitungen). Die Anzahl möglicher zu verwendender optischer und elektrischer Leiter ist jedoch nicht auf dieses Beispiel beschränkt, sondern kann beispielsweise in Abhängigkeit der Baugröße des Isolierkörpers und dessen jeweiliger Anwendung beliebig gewählt werden. So sind beispielsweise Isolierkörper für 1, 2, 3, 4, 5, ... optische Leiter und 1, 2, 3, 4, 5, ... elektrische Leiter in beliebigen Kombinationen derselben vorgesehen.

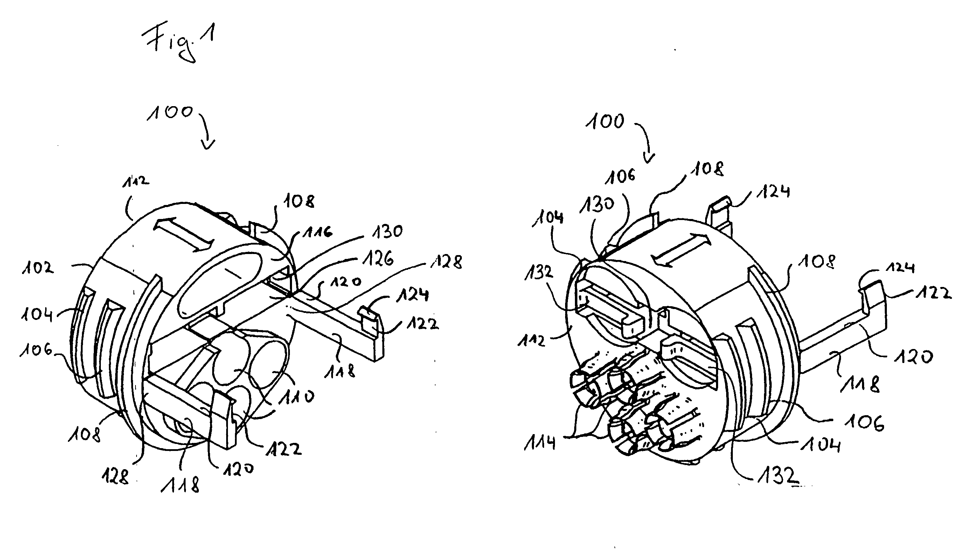

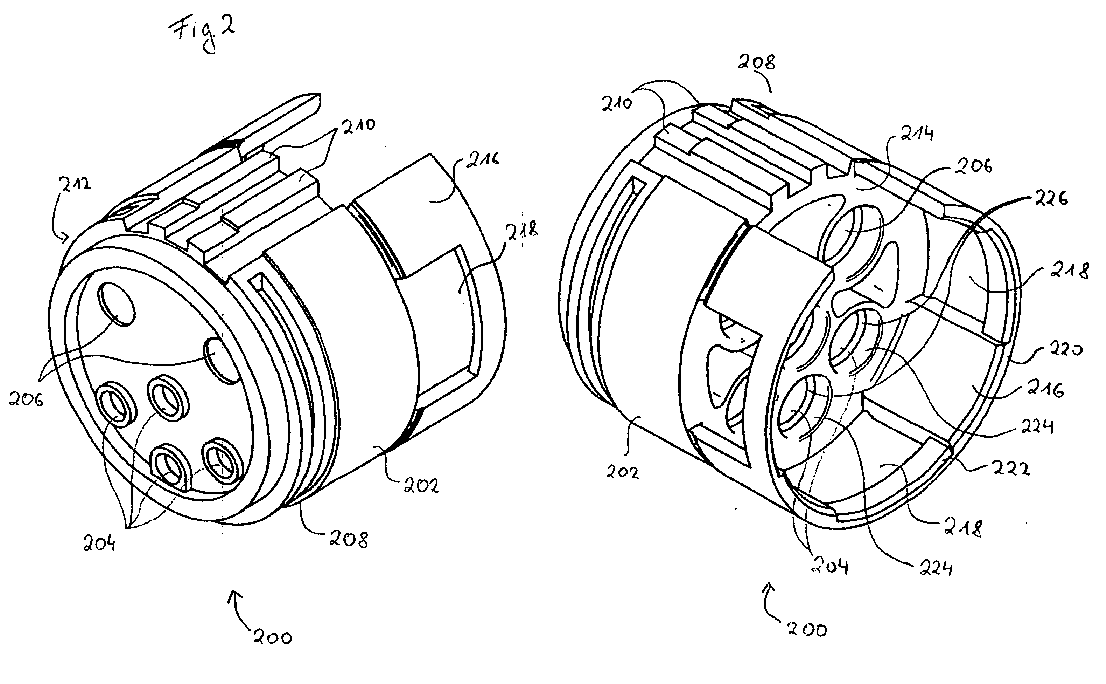

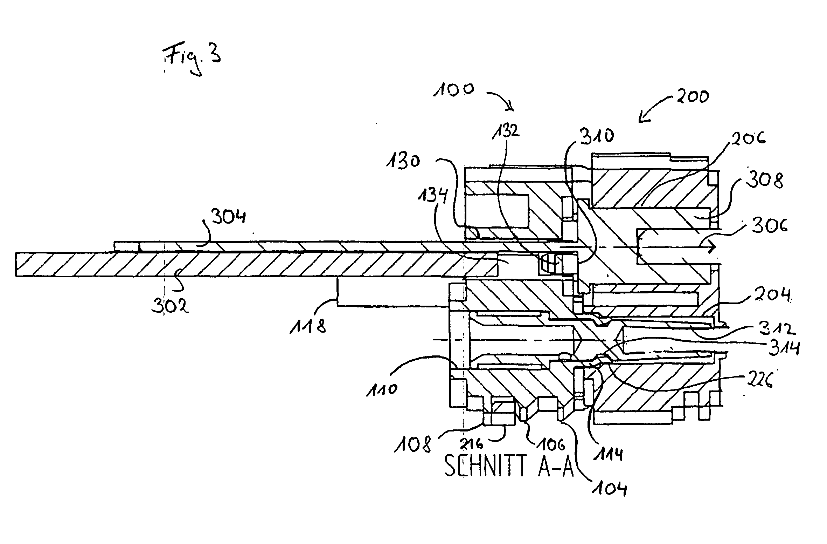

Bezugnehmend auf Fig. 1, 2 und 3 wird ein Isolierkörper detailliert beschrieben. Der Isolierkörper umfaßt ein in Fig. 1 gezeigtes Unterteil 100 und ein in Fig. 2 gezeigtes Oberteil 200, deren zusammengebauter, zu dem Isolierkörper verrasteter Zustand in Fig. 3 zu sehen ist.

Das Unterteil 100 umfaßt einen länglichen Körper mit einem im wesentlichen runden Querschnitt, der wie im folgenden detaillierter beschrieben, in Längsrichtung Durchführungen für optische und elektrische Leiter sowie eine darin ausgebildete Aufnahme für eine Leiterplatte aufweist. Am Außenumfang des Körpers 102 sind ein erstes Rastelement 104, ein zweites Rastelement 106 und ein Anschlag 108 ausgeformt. Die Rastelemente 104 und 106 und der Anschlag 108 erstrecken sich in radialer Richtung um den Außenumfang des Körpers 102, wobei die Rastelemente 104 und 106 einen im wesentlichen trapezförmigen Querschnitt haben, während der Anschlag 108 einen im wesentlichen rechteckigen Querschnitt aufweist. Bei der dargestellten Ausführungsform umfassen die Rastelemente 104 und 106 jeweils drei Flansche, die wie im folgenden beschrieben, mit dem Oberteil 200 des Isolierkörpers zusammenwirken. In Abhängigkeit der Ausführungen des Oberteils 200 kann das erste Rastelement 104 und/oder das zweite Rastelement 106 jeweils auch einstückig ausgeformt sein oder weniger oder mehr als drei Komponenten (Flansche, Rasten) umfassen.

Der Anschlag 108 wird durch einen ringförmigen Flansch gebildet, der in einem Bereich des Außenumfangs des Körpers 102, der in Fig. 1 oben dargestellt ist, unterbrochen ist. In Abhängigkeit der Ausführung des Oberteils 200 ist es auch hier vorgesehen, daß der Anschlag 108 durch einen vollständig geschlossenen ringförmigen Flansch oder, vergleichbar zu den Rastelementen 104 und 106, durch mehrere Elemente gebildet wird.

Der Körper 102 weist vier Kontaktdurchführungen 110 für elektrische Kontakte auf, die an der in den Darstellungen von Fig. 1 links gezeigten Oberseite 112 des Unterteils 100 jeweils eine Spannzange 114 umfassen. Die Spannzangen 114 sind elastisch so gestaltet, daß elektrische Kontakte (Buchsenkontakte) von der in den Darstellungen von Fig. 1 rechts gezeigten Unterseite 116 des Unterteils 100 in den Körper 102 eingesetzt und dort, wie im folgenden beschrieben, von den Spannzangen 114 in Wirkverbindung mit dem Oberteil 200 gesichert werden können.

Von der Unterseite 116 erstrecken sich in Längsrichtung des Körpers 102 zwei Leiterplattenfixierelemente 118 mit jeweils einer Leiterplattenauflage 120 und einem Leiterplattenhalter 122. Die Leiterplattenhalter 122 erstrecken sich im wesentlichen senkrecht zur Längsachse der Leiterplattenfixierelemente 118 und weisen jeweils eine elastische Nase 124 auf. Die elastischen Nasen 124 dienen zum Sichern von Leiterplatten (nicht gezeigt), wenn diese in Kontakt mit den Leiterplattenauflagen 120 von den Leiterplattenfixierelementen 118 getragen werden.

Ferner ist zur besseren Sicherung von Leiterplatten in dem Körper 102 eine Leiterplattenaufnahme 126 ausgebildet, die einen Endbereich einer auf den Leiterplattenauflagen 120 angeordneten Leiterplatte aufnehmen kann. Die Leiterplattenaufnahme 126 kann weggelassen werden, wenn deren Haltefunktion durch entsprechend gestaltete Leiterplattenfixierelemente 118 übernommen wird. Hierfür können beispielsweise Leiterplattenfixierelemente 118 verwendet werden, die anstelle der Leiterplattenauflage 122 jeweils zwei Leiterplattenhalter oder in Längsrichtung der Leiterplattenfixierelemente 118 vergrößerte Leiterplattenhalter 122 aufweisen.

Außerdem weisen die Leiterplattenfixierelemente 118 in den an den Körper 102 angrenzenden Bereichen Sollbruchstellen 128 auf, um die Leiterplattenfixierelemente 118 einfach entfernen zu können, wenn der Isolierkörper ohne Leiterplatten verwendet werden soll.

In Längsrichtung durch den Körper 102 erstreckt sich eine Lichtleiterdurchführung 130, die im Bereich der Unterseite 116 des Unterteils 100 mit der Leiterplattenaufnahme 126 in Verbindung steht. Die Verwendung einer Lichtleiterdurchführung 130 für zwei Lichtleiter (nicht gezeigt) ermöglicht es, diese schon im Bereich des Körpers 102 so zu führen, daß sie mit den entsprechenden Stellen auf einer Leiterplatte (nicht gezeigt) verbunden werden können. Somit ist es nicht mehr erforderlich, in dem Unterteil 100 angeordnete Lichtleiter durch diesen in Longitudinalrichtung geradlinig zu führen und erst im Bereich einer Leiterplatte außerhalb des Körpers 102 zu entsprechenden Verbindungsstellen zu führen. Folglich können die Krümmungsradien nicht geradlinig geführter Lichtleiter reduziert werden, wodurch optische Verluste in den Lichtleitern verringert werden. Außerdem können kleinere Leiterplatten verwendet werden, wodurch die gesamte Bauform einer den Isolierkörper verwendenden Steckverbindung verringert wird.

Demgegenüber ist es aber auch vorgesehen, für jeden durch das Unterteil 100 zu führenden Lichtleiter jeweils eine Lichtleiterdurchführung mit einem entsprechenden Federelement zu verwenden. Auch die Verbindung der Lichtleiterdurchführung 130 mit der Leiterplattenaufnahme 126 im Bereich der Unterseite des Unterteils 100 ist nicht zwingend erforderlich, vielmehr können auch von der Leiterplattenaufnahme 126 getrennt ausgeführte Lichtleiterdurchführungen 130 verwendet werden.

Ferner sind in dem der Oberseite 112 benachbarten Bereich zwei Federelemente 132 ausgebildet, die sich in der Lichtleiterdurchführung 130 von dieser radial nach innen und quer zur deren Längsrichtung erstrecken. Die Federelemente 132 sind elastisch und weisen an ihrem in radialer Richtung innen liegenden Ende jeweils eine Nase oder einen Flansch 134 auf.

Das Oberteil 200 weist einen länglichen Körper 202 mit einem im wesentlichen runden Querschnitt auf, in dem entsprechend zu den Kontaktdurchführungen 110 und der Lichtleiterdurchführung 130 des Unterteils 100 Kontaktdurchführungen 204 und Lichtleiterdurchführungen 206 ausgebildet sind. Am Außenumfang des Körpers 202 sind in radialer und longitudinaler Richtung Verrastungselemente 208 und Führungselemente 210 ausgebildet. Die Verrastungs- und Führungselemente 208 und 210 sind in Abhängigkeit des Gehäuses (z.B. TO250) des Steckverbinders auszugestalten, in dem der Isolierkörper verwendet werden soll. So sind die Verrastungselemente 208 am Außenumfang des Körpers 202 im Bereich der Oberseite 212 des Oberteils 200 angeordnet, um eine gewünschte Wirkverbindung mit einem zu verwendenden Gehäuse zu ermöglichen.

An der Unterseite 214 des Körpers 202 erstreckt sich in dessen Längsrichtung ein Distanzkragen 216. Der Distanzkragen 216 weist in Längsrichtung einen im wesentlichen runden Querschnitt auf und ist vergleichbar zu dem Anschlag 108 des Unterteils 100 in dem in den Darstellungen von Fig. 2 oben gezeigten Bereichen unterbrochen. Ferner weist der Distanzkragen 216 drei Rastfenster 218 auf, die zum Verrasten mit jeweils einem Flansch des ersten Rastelementes 104 oder jeweils mit einem Flansch des Rastelementes 106 des Unterteils 100 dienen. Bezugnehmend auf Fig. 1 ist festzustellen, daß die Anzahl und Ausgestaltung der Rastfenster 218 vergleichbar zu den oben genannten Modifikationen der Rastelemente 104 und 106 des Unterteils 100 variiert werden kann, solange die im folgenden beschriebenen Wirkverbindungen der Rastfenster 218 mit den Rastelementen 104 und 106 erreicht werden.

Die dem Körper 202 gegenüberliegende Stirnseite 220 des Distanzkragens 216 dient als Gegenlager für den Anschlag 108 des Unterteils 100. Dieses Gegenlager wird insbesondere durch einen gestuften Bereich 222 der Stirnfläche 220 gebildet, der zur paßgenauen Aufnahme des Anschlags 108 geeignet ist.

Die Kontaktdurchführungen 204 erstrecken sich durch den Körper 202 von dessen Oberseite 212 zu dessen Unterseite 214, wobei an den unterseitigen Enden der Kontaktdurchführung 204 jeweils ein Aufnahmebereich 224 für eine entsprechende Spannzange 114 vorhanden ist. Die Aufnahmebereiche 224 weisen einen Durchmesser auf, der es erlaubt, die Spannzangen 114 ohne eine elastische Verformung derselben einzuführen. In Längsrichtung der Kontaktdurchführungen 204 schließt sich an jeden Aufnahmebereich 224 ein verjüngter Bereich 226 an, der einen Durchmesser hat, der kleiner als der Durchmesser des Aufnahmebereichs 224 ist und eine eingeführte Spannzange 114 elastisch verformen kann. Beim Einführen der Spannzangen 114 in die Kontaktdurchführungen 204 werden die Spannzangen 114 durch Kontakt mit den verjüngten Bereichen 226 radial nach innen gerichtet elastisch verformt und erlauben somit, wie im folgenden beschrieben, eine Sicherung von elektrischen Kontakten (nicht gezeigt).

Um den Isolierkörper zu verwenden, werden das Unterteil 100 und das Oberteil 200 miteinander verrastet, wobei die ersten und zweiten Rastelemente 104 und 106 des Unterteils 100 in Wirkverbindung mit dem Rastfenster 218 des Oberteils 200 zwei Raststellungen erlauben. Die erste Raststellung, die vorliegt, wenn die ersten Rastelemente 104 in den Rastfenstern 218 verrasten, erlaubt eine Montage und Demontage von elektrischen Kontakten (nicht gezeigt). Hierfür sind die ersten Rastelemente 104, die Spannzangen 114, die Rastfenster 218, die Aufnahmebereiche 224 und die verjüngten Bereiche 226 so dimensioniert, daß in der ersten Raststellung die Spannzangen 114 in die Aufnahmebereiche 224 hineinragen, aber nicht in Wirkverbindung mit den verjüngten Bereichen 226 stehen. Somit werden die Spannzangen 114 nicht elastisch verformt und elektrische Kontakte können einfach eingeführt werden. Nach der Konfektionierung des Isolierkörpers mit gewünschten elektrischen Kontakten, werden zum Erreichen der zweiten Raststellung die zweiten Rastelemente 106 in den Rastfenstern 218 verrastet, wobei die Spannzangen in den verjüngten Bereichen 226 in den Kontaktdurchführungen 204 radial nach innen elastisch verformt werden. Wie im folgenden unter Bezugnahme auf Fig. 3 beschrieben, greifen die Spannzangen 114, die einen elektrischen Kontakt umfassen, jeweils in einen Hinterschnitt des entsprechenden elektrischen Kontaktes ein und sichern diesen in dem Isolierkörper.

Um elektrische Kontakte von dem Isolierkörper zu entfernen, werden das Unterteil 100 und da Oberteil 200 in die erste Raststellung gebracht, wodurch die verjüngten Bereiche 226 die Spannzangen 114 freigeben. In der Folge greifen die Spannzangen 114 nicht mehr in die Hinterschnitte entsprechender elektrischer Kontakte, so daß diese auf einfache Weise entfernt werden können.

Die Verwendung der beiden Raststellungen, nämlich einer Montage/Demontage-Stellung und einer Arbeitsstellung, erlaubt es, den Isolierkörper ohne zusätzliche Werkzeuge zu konfektionieren.

Wie eingangs erwähnt, ist bei der Übertragung von optischen Signalen insbesondere darauf zu achten, daß die Dämpfung der zu übertragenden optischen Signale in den Kontaktbereichen der zur Übertragung verwendeten Komponenten möglichst gering ist. Um die Dämpfung optischer Signale in dem Isolierkörper zu minimieren, ist sicherzustellen, daß unabhängig von der Längentoleranz der Gehäusebauteile eines Steckverbinders, in dem der Isolierkörper verwendet wird, das Unterteil 100 und das Oberteil 200 sowie darin angeordnete Komponenten zur Übertragung optischer Signale in der zweiten Raststellung (Arbeitsstellung) eine vorgegebene Position zueinander haben. Hierfür dient der Distanzkragen 216, der als Gegenlager für den Anschlag 108 gewährleistet, daß das Unterteil 100 und das Oberteil 200 zueinander auf Block fahren und somit jederzeit im geschlossenen Zustand (i.e. die zweite Raststellung) die gleiche Position zueinander einnehmen.

Um Toleranzen von optischen Bauelementen des Isolierkörpers auszugleichen, werden die Federelemente 132 des Unterteils 100 verwendet. Wie im folgenden unter Bezugnahme auf Fig. 3 näher erläutert, drücken die Federelemente 132 jeweils gegen eine Stirnfläche eines optischen Elements, so daß dieses ein entsprechendes (optisches) Gegenstück eines Steckverbinders, der in Verbindung mit einem den Isolierkörper aufweisenden Steckverbinder verwendet wird, ohne dazwischenliegenden Luftspalt kontaktiert.

Zur Konfektionierung des Isolierkörpers mit optischen Bauelementen, werden diese in der Lichtleiterdurchführung 130 des Unterteils 100 angeordnet, bevor das Unterteil 100 mit dem Oberteil 200 in der ersten Raststellung zur Konfektionierung mit elektrischen Kontakten verrastet wird. Diese Vorgehensweise ist erforderlich, wenn wie in Fig. 3 dargestellte optische Leiter verwendet werden. Um optische Leiter in der ersten Raststellung in dem Isolierkörper anzuordnen, können beispielsweise optische Leiter verwendet werden, die an ihrem Außenumfang angeordnete Rasten oder Nasen aufweisen. Um die gewünschte Wirkverbindung mit den Federelementen 132 herzustellen, werden solche optischen Leiter um ihre Längsachse in dem Isolierkörper so gedreht, daß die Rasten oder Nasen die entsprechenden Federelemente 132 kontaktieren. Ferner ist es möglich, anstelle der blattfederartig ausgebildeten Federelemente 132, Federelemente zu verwenden, die wenigstens teilweise spiralförmig sind. Hierbei sind die Durchmesser der spiralförmigen Bereiche so zu dimensionieren, daß einerseits optische Leiter zur Anordnung in dem Isolierkörper durch diesen geführt werden können und andererseits eine Reibwirkung zwischen den optischen Leitern und solchen Federelementen erzeugt wird, um deren Positionierungsfunktion bereitzustellen.

Die Befestigung einer Leiterplatte unter Verwendung der Leiterplattenfixierelemente 118 an dem Isolierkörper kann in Abhängigkeit der Anwendung zu einem beliebigen Zeitpunkt bei der Konfektionierung des Isolierkörpers und/oder dessen Anordnung in Gehäusebauteilen eines zu verwendenden Steckverbinders durchgeführt werden. Die Verwendung einer Leiterplatte an dem Isolierkörper erlaubt es, Schaltkreise für unterschiedlichste Anforderungen baueinheitlich mit dem Isolierkörper zu verbinden und somit in einen zu verwendenden Steckverbinder zu integrieren. Beispiele für Schaltkreise einer solchen Leiterplatte sind Komponenten zur optischen und/oder elektrischen Signalübertragung, Komponenten zur Umwandlung von elektrischen Signalen in optische Signale und umgekehrt, Mikroprozessoren und dergleichen. Soll keine Leiterplatte in Verbindung mit dem Isolierkörper verwendet werden, können die Leiterplattenfixierelemente 118 aufgrund der Sollbruchstellen 128 auf einfache Weise von dem Unterteil 100 entfernt werden.

In Fig. 3 ist der Isolierkörper in der zweiten Raststellung (i.e. die Arbeitsstellung: die zweiten Rastelemente 106 sind in den Rastfenstern 218 verrastet und der Anschlag 108 in Verbindung mit dem Distanzkragen 216 sorgt für die gewünschte Positionierung der Unter- und Oberteile 100, 200) mit optischen und elektrischen Komponenten zur Signalübertragung dargestellt. Unter Verwendung der Leiterplattenfixierelemente 118 ist eine Leiterplatte 302 an dem Unterteil 100 angebracht, wobei ein in Fig. 1 nicht gezeigter Leiterplattenanschlag 134 in der Leiterplattenaufnahme 126 für eine gewünschte Positionierung der Leiterplatte 302 dient.

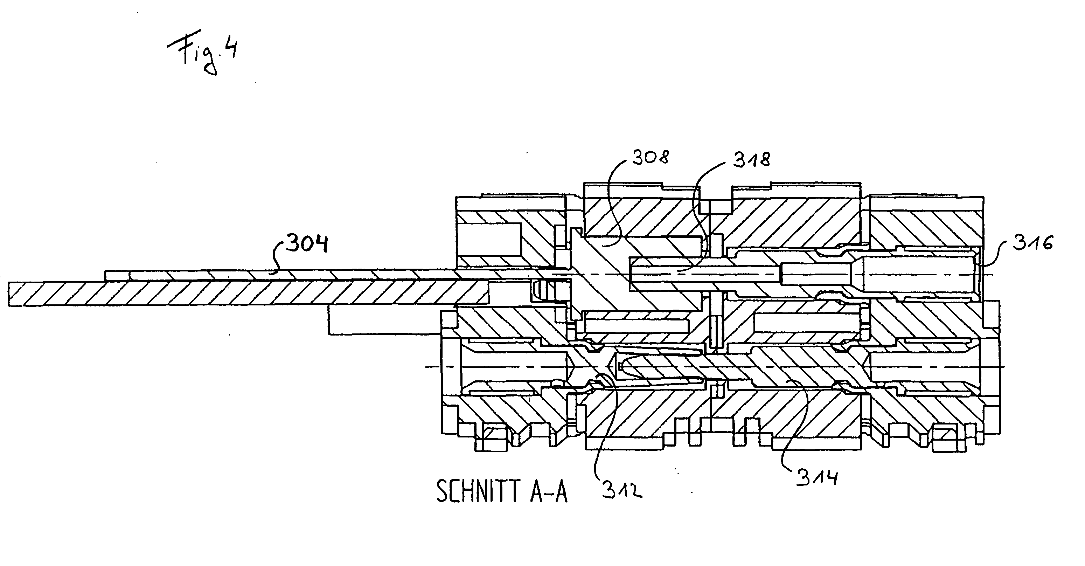

In den Lichtleiterdurchführungen 130 und 206 der Unter- und Oberteile 100 und 200 ist ein Lichtleiter 304 angeordnet, der durch das Federelement 132 in Richtung des Pfeils 306 gedrückt wird, um wie unter Bezugnahme auf Fig. 4 erläutert einen entsprechenden Kontakt zu kontaktieren. Insbesondere weist der Lichtleiter 304 ein buchsenförmiges Lichtleiterende 308 auf, an dessen Stirnfläche 310 das Federelement 132 angreift. Anstelle des buchsenförmigen Lichtleiterendes 308 kann der Lichtleiter 304 ein stiftförmiges Ende zum Kontakt mit einem entsprechend geformten (buchsenförmigen) Lichtleiter (nicht gezeigt) umfassen, wobei der Lichtleiter 304 im Bereich des Federelements 132 so geformt sein muß, daß dieses an dem Lichtleiter 304 angreifen kann, um diesen in Richtung des Pfeiles 306 (in Fig. 3 nach rechts) zu drücken.

In den Kontaktdurchführungen 110 und 204 der Unter- und Oberteile 100 und 200 ist ein elektrischer Kontakt 308 zur Aufnahme eines in Fig. 4 gezeigten Kontaktstiftes angeordnet. Wie oben erwähnt, kann anstelle des im Bereich des Oberteils 200 als Buchse geformten Kontaktes 312 ein in diesem Bereich als Stiftkontakt ausgebildeter Kontakt verwendet werden. Wie oben unter Bezugnahme auf Fig. 1 und 2 beschrieben, wird die in Fig. 3 dargestellte Spannzange 114 durch den entsprechenden verjüngten Bereich 326 in der Kontaktdurchführung 204 radial nach innen elastisch verformt. Dadurch greift die Spannzange 114 in einen Kontakthinterschnitt 314 des Kontaktes 312 ein und sichert auf diese Weise diesen in dem Isolierkörper.

Bei dem in Fig. 3 dargestellten Beispiel wird angenommen, daß die Leiterplatte 302 aktive Halbleiterelemente aufweist, um über den Lichtleiter 304 empfangene optische Signale in entsprechende elektrische Signale und elektrische Signale zur Übertragung über den Lichtleiter 304 in optische Signale umzuwandeln.

In Fig. 4 ist eine unter Verwendung des Isolierkörpers hergestellte Verbindung zur Übertragung optischer und elektrischer Signale mittels eines Steckverbinders dargestellt, dessen Gehäusebauteile weggelassen wurden. Elektrische Signale werden über den Kontakt 312 und einen Kontaktstift 314 übertragen, wobei deren Form in entsprechenden sich kontaktierenden Bereichen eine sichere elektrische Signalübertragung gewährleistet.

Optische Signale werden über den Lichtleiter 304 und einen Lichtleiter 316 übertragen, der zum Kontakt mit dem buchsenförmigen Lichtleiterende 308 einen entsprechend geformten Stiftkontakt 318 aufweist.

Anstelle der Lichtleiter 304 und 316 ist es auch vorgesehen, Leiter von sogenannten "Twisted Pair"-Leitungen zu verwenden.

## Patentansprüche

1. Isolierkörper für einen Steckverbinder zur Übertragung optischer und elektrischer Signale, mit:
- einem Unterteil (100) mit Durchführungen (110) für elektrische Leiter (304) und mit einem ersten Rastelement (104), einem zweiten Rastelement (106) und einem Anschlag (108), und
- einem Oberteil (200) mit einem Distanzkragen (216) und einer an dem Distanzkragen (216) angeordneten Rasteinrichtung (218), wobei
- in einer ersten Raststellung das erste Rastelement (104) mit der Rasteinrichtung (218) verrastet ist,
- in einer zweiten Raststellung das zweite Rastelement (106) mit der Rasteinrichtung (218) verrastet ist, und
- in der zweiten Raststellung der Anschlag (108) in mechanischer Wirkverbindung mit dem Distanzkragen (216) steht,
**dadurch gekennzeichnet, daß**
- das Unterteil (100) Durchführungen (130) für optische Leiter (304) aufweist, und
- in wenigstens einer dieser Durchführungen (130) ein sich quer zur Längsrichtung der zugehörigen Durchführung (130) erstreckendes blattfederartiges Federelement (132) angeordnet ist, das in der zweiten Raststellung eine auf einen in einer entsprechenden dieser Durchführungen (130) angeordneten elektrischen oder optischen Leiter (304) in Durchführungslängsrichtung wirkende Federkraft erzeugt.

2. Isolierkörper gemäß Anspruch 1, **dadurch gekennzeichnet, daß**
das Federelement (132) in der ersten Raststellung eine auf einen in einer entsprechenden der Durchführungen (130) angeordneten elektrischen oder optischen Leiter (304) wirkende Federkraft erzeugt, die geringer als die Federkraft in der zweiten Raststellung ist.

3. Isolierkörper gemäß einem der vorhergehenden Ansprüche, **dadurch gekennzeichnet, daß**
das Unterteil (100) Einrichtungen (118, 120, 122, 124, 126, 128) zur baueinheitlichen Integration einer Leiterplatte (302) aufweist.

4. Isolierkörper gemäß einem der vorhergehenden Ansprüche, **dadurch gekennzeichnet, daß**
wenigstens eine der Durchführungen (110) für elektrische Leiter (312) eine Spannzange (114) umfaßt, die in der zweiten Raststellung zur Sicherung eines elektrischen Leiters (312) eine Sicherungsstellung einnimmt.

5. Isolierkörper gemäß Anspruch 4, **dadurch gekennzeichnet, daß**
die Spannzange (114) in der ersten Raststellung zur Montage und/oder Demontage elektrischer Leiter (312) eine Freigabestellung einnimmt.

6. Isolierkörper gemäß Anspruch 4 oder 5, **dadurch gekennzeichnet, daß**
das Oberteil (200) den Durchführungen (110) für elektrische Leiter (312) des Unterteils (100) zugeordnete Durchführungen (204) für elektrische Leiter (312) aufweist, wobei die wenigstens eine Spannzange (114) in der zweiten Raststellung aufgrund einer mechanischen Wirkverbindung mit einem Bereich (226) der zugehörigen Durchführungen (204) des Oberteils (200) die Sicherungsstellung einnimmt.

7. Isolierkörper gemäß Anspruch 6, **dadurch gekennzeichnet, daß**
eine der wenigstens einen Spannzange (114) zugeordnete Durchführung (204) für elektrische Leiter (312) des Oberteils (200) einen Aufnahmebereich (224) aufweist, wobei in der ersten Raststellung die entsprechende Spannzange (114) wenigstens teilweise in dem Aufnahmebereich (224) angeordnet ist.

8. Isolierkörper gemäß einem der vorhergehenden Ansprüche, **dadurch gekennzeichnet, daß**
die ersten und/oder zweiten Rastelemente jeweils einstückig sind und/oder jeweils mehrere Rasten umfassen.

9. Isolierkörper gemäß einem der vorhergehenden Ansprüche, **dadurch gekennzeichnet, daß**
die Rasteinrichtung (218) des Oberteils (200) wenigstens ein in dem Distanzkragen (216) ausgebildetes Rastfenster (218) und/oder wenigstens eine in dem Distanzkragen (216) ausgebildete Ausnehmung umfaßt.

10. Isolierkörper nach einem der Ansprüche 3 bis 9, **dadurch gekennzeichnet, daß**
die Einrichtung zur baueinheitlichen Integration einer Leiterplatte (302) zwei sich in Längsrichtung des Isolierkörpers von dem Unterteil (100) erstreckende Leiterplattenfixierelemente (118) umfaßt.

11. Isolierkörper gemäß einem der Ansprüche 3 bis 10, **dadurch gekennzeichnet, daß**
die Einrichtung zur baueinheitlichen Integration einer Leiterplatte (302) eine in dem Unterteil (100) ausgebildete Leiterplatteaufnahme (126) aufweist, die wenigstens teilweise mit der Durchführung (130) des Unterteils (100) für optische oder elektrische Leiter in Verbindung steht.

## Claims

1. An insulating body for a connector for the transmission of optical and/or electric signals, comprising:
- a lower part (100) with bushings (110) for electrical conductors (304) and with a first engaging element (104), a second engaging element (106), and a stop (108), and
- an upper part (200) with a distance collar (216) and an engagement means (218) arranged at the distance collar (216), wherein
- in a first engagement position the first engaging element (104) is engaged with the engagement means (218),
- in a second engagement position the second engaging element (106) is engaged with the engagement means (218), and
- in the second engagement position the stop (108) is in a mechanical effective connection with the distance collar (216),
**characterised in that**
- the lower part (100) comprises bushings (130) for optical fibres (304), and
- in at least one of these bushings (130) a leaf spring-type spring element (132) extending transversely to the longitudinal direction of the associated bushing (130) is arranged which spring element (132) in the second engagement position generates a spring force acting on an electrical or optical conductor (304) arranged in a corresponding one of these bushings (130) in the longitudinal direction of the bushing.

2. The insulating body according to Claim 1, **characterised in that**
the spring element (132) in the first engagement position generates a spring force acting on an electrical or optical conductor (304) arranged in a corresponding bushing (130), which is smaller than the spring force in the second engagement position.

3. The insulating body according to one of the previous claims, **characterised in that**
the lower part (100) comprises means (118, 120, 122, 124, 126, 128) for the structurally consistent integration of a printed circuit board (302).

4. The insulating body according to one of the previous claims, **characterised in that**
at least one of the bushings (110) for electrical conductors (312) comprises a gripping collet (114) which, in the second engagement position, assumes a locking position for securing an electric conductor (312).

5. The insulating body according to Claim 4, **characterised in that**
the gripping collet (114) in the first engagement position for assembly and/or disassembly of electrical conductors (312) assumes a release position.

6. The insulating body according to Claim 4 or 5, **characterised in that**
the upper part (200) comprises bushings (204) for electrical conductors (312) associated with the bushings (110) for electrical conductors (312) of the lower part (100), with the at least one gripping collet (114) assuming the locking position in the second engagement position due to a mechanical effective connection with an area (226) of the associated bushings (204) of the upper part (200).

7. The insulating body according to Claim 6, **characterised in that**
one of the bushings (204) for electrical conductors (312) of the upper part (200) associated with the at least one gripping collet (114) comprises a mounting area (224), with the corresponding gripping collet (114) being arranged at least partially in the mounting area (224) in the first engagement position.

8. The insulating body according to one of the previous claims, **characterised in that**
each first and/or second engaging elements is/are integral and/or comprise/s several notches.

9. The insulating body according to one of the previous claims, **characterised in that**
the engagement means (218) of the upper part (200) comprises at least one engagement window (218) formed in the distance collar (216) and/or at least one recess formed in the distance collar (216).

10. The insulating body according to one of Claims 3 to 9, **characterised in that** the means for the structurally consistent integration of a printed circuit board (302) comprises two printed circuit board locating elements (118) extending from the lower part (100) in the longitudinal direction of the insulating body.

11. The insulating body according to one of Claims 3 to 10, **characterised in that**
the means for the structurally consistent integration of a printed circuit board (302) comprises a printed circuit board receptacle (126) that is formed in the lower part (100) and is at least partially connected with the bushing (130) of the lower part (100) for optical or electrical conductors.

## Revendications

1. Corps isolant pour connecteur de transmission de signaux optiques et électriques, comprenant :
- une partie inférieure (100) pourvue de traversées (110) pour le passage de conducteurs électriques (304) et d'un premier élément d'encliquetage (104), d'un second élément d'encliquetage (106) et d'une butée (108), et
- une partie supérieure (200) pourvue d'un collet d'écartement (216) et d'un dispositif d'encliquetage (218) aménagé dans ledit collet d'écartement (216),
- le premier élément d'encliquetage (104) étant, dans une première position d'encliquetage, verrouillé à l'aide du dispositif d'encliquetage (218),
- le second élément d'encliquetage (106) étant, dans une seconde position d'encliquetage, verrouillé à l'aide du dispositif d'encliquetage (218), et
- la butée (108) étant, dans la seconde position d'encliquetage, en liaison mécanique active avec le collet d'écartement (216),
**caractérisé en ce que**
- la partie inférieure (100) présente des traversées (130) pour le passage de conducteurs optiques (304), et
- un élément ressort (132) de type à lames, qui s'étend perpendiculairement au sens de la longueur de la traversée (130) à laquelle il est associé, est disposé dans au moins une desdites traversées (130), lequel élément ressort génère, dans la seconde position d'encliquetage, une force élastique agissant dans le sens de la longueur de la traversée sur un conducteur (304) électrique ou optique disposé dans une traversée (130) correspondante.

2. Corps isolant selon la revendication 1, **caractérisé en ce que**
l'élément ressort (132) génère, dans la première position d'encliquetage, une force élastique agissant sur un conducteur électrique ou optique (304) disposé dans une traversée (130) correspondante, laquelle force est inférieure à celle générée dans la seconde position d'encliquetage.

3. Corps isolant selon l'une des revendications précédentes, **caractérisé en ce que**
la partie inférieure (100) présente des aménagements (118, 120, 122, 124, 126, 128) permettant l'intégration comme module d'une carte à circuits imprimés (302).

4. Corps isolant selon l'une des revendications précédentes, **caractérisé en ce que**
au moins une des traversées (110) pour le passage de conducteurs électriques (312) comprend une pince de serrage (114), laquelle prend, dans la seconde position d'encliquetage, une position de blocage permettant de maintenir en position un conducteur électrique (312).

5. Corps isolant selon la revendication 4, **caractérisé en ce que**
la pince de serrage (114) prend, dans la première position d'encliquetage, une position de déblocage pour le montage et/ou le démontage de conducteurs électriques (312).

6. Corps isolant selon la revendication 4 ou 5, **caractérisé en ce que**
la partie supérieure (200) présente des traversées (204) permettant le passage de conducteurs électriques (312), lesquelles sont associées aux traversées (110) destinées au passage de conducteurs électriques (312) de la partie inférieure (100), ladite pince de serrage (114) prenant, dans la seconde position d'encliquetage, la position de blocage du fait de l'entrée en action d'une liaison mécanique avec une zone (226) d'une traversée (204) correspondante de la partie supérieure (200).

7. Corps isolant selon la revendication 6, **caractérisé en ce que**
une traversée (204) permettant le passage de conducteurs électriques (312) de la partie supérieure (200) et associée à une pince de serrage (114) présente une zone de logement (224), ladite pince de serrage (114) étant, dans la première position d'encliquetage, disposée pour le moins partiellement dans la zone de logement (224).

8. Corps isolant selon l'une des revendications précédentes, **caractérisé en ce que**
les premiers et/ou les seconds éléments d'encliquetage sont respectivement constitués d'un seul tenant et/ou comportent chacun plusieurs crans.

9. Corps isolant selon l'une des revendications précédentes, **caractérisé en ce que**
le dispositif d'encliquetage (218) de la partie supérieure (200) comprend au moins une fenêtre d'encliquetage (218) formée dans le collet d'écartement (216) et/ou pour le moins un évidement formé dans le collet d'écartement (216).

10. Corps isolant selon l'une des revendications 3 à 9, **caractérisé en ce que**
l'aménagement permettant l'intégration comme module d'une carte à circuits imprimés (302) comprend deux éléments (118) destinés à la fixation de la carte à circuits imprimés et s'étendant de la partie inférieure (100) dans le sens de la longueur du corps isolant.

11. Corps isolant selon l'une des revendications 3 à 10, **caractérisé en ce que**
l'aménagement permettant l'intégration comme module d'une carte à circuits imprimés (302) présente un logement (126) de carte formé dans la partie inférieure (100), lequel logement est pour le moins partiellement en liaison avec la traversée (130) de la partie inférieure (100) pour le passage de conducteurs optiques ou électriques.
